# FASCICULE DE BREVET EUROPEEN

(11) **EP 0 800 695 B1**
(45) Date de publication et mention de la délivrance du brevet: **19.07.2000**
(21) Numéro de dépôt: 95905686.2
(22) Date de dépôt: 29.12.1994
(51) Int. Cl.: G09B 5/14, G09B 7/00, G06F 17/30

(54) **POSTES DE TRAVAIL, SYSTEME ET METHODE POUR APPLICATION PEDAGOGIQUE MULTIMEDIA**
BILDSCHIRMARBEITSPLATZ, SYSTEM UND VERFAHREN FÜR EINE PÄDAGOGISCHE MULTIMEDIA-ANWENDUNG
WORK STATIONS, SYSTEM AND METHOD FOR A MULTIMEDIA LEARNING APPLICATION

(43) Date de publication de la demande: 15.10.1997
(73) Titulaire: TELIDE S.A., 31150 Bruguières (FR)
(72) Inventeur: FAGGION, André, 31620 Gargas (FR)
(74) Mandataire: Richebourg, Michel François
(86) Numéro de dépôt international: FR9401552
(87) Numéro de publication internationale: WO9621212

(56) Documents cités:
- EP-A- 0 228 634
- EP-A- 0 321 084
- EP-A- 0 460 869
- EP-A- 0 616 309
- WO-A-93/16454
- WO-A-93/21618
- US-A- 4 820 167
- US-A- 5 303 042
- US-A- 5 318 450

## Description

La présente invention concerne le secteur technique des outils pédagogiques multimédia avec application, notamment, aux bas niveaux de qualification et aux niveaux de qualification hétérogènes, voir par exemple WO-A-9 376 454.

On connaît naturellement les outils modernes de communication et d'information que sont le Minitel, la télécopie, les banques de données (de plus en plus nombreuses sur supports dits 〈〈 CD-ROM 〉〉 et il sera inutile de les décrire en détail ni même de les rappeler ici.

On connaît aussi les problèmes très spécifiques posés par l'enseignement, notamment lorsqu'il s'adresse à des étudiants ou stagiaires, y compris pour la formation professionnelle des adultes et missions analogues de grand intérêt social et public, qui présentent des niveaux faibles de qualification, ou des niveaux hétérogènes de qualification requérant des attentions différentes. Le cas le plus complexe à traiter, et c'est également le plus fréquent, est la combinaison de niveaux faibles et hétérogènes. Les effectifs étant souvent peu nombreux, il est impossible de constituer un groupe homogène d'étudiants ou de stagiaires. Or, si le groupe est non homogène, l'efficacité pédagogique va s'en ressentir fortement.

On a déjà songé à des enseignements par petits groupes, mais le problème de l'homogénéité se pose encore surtout aux faibles qualifications où les disparités en matière d'aptitude intellectuelle, de vitesse et de puissance de travail, de capacité d'écoute etc... sont à la fois les plus marquées et les plus imprévisibles, sans oublier l'impossibilité de multiplier les postes de professeurs.

On a également déjà songé à utiliser des outils pédagogiques multimédia qui se sont heurtés aux mêmes problèmes, souvent aggravés par l'isolement total de l'enseignant ou du formateur.

Par ailleurs, il est souvent nécessaire d'acquérir de nombreux outils pédagogiques, ce qui dissuade fortement les utilisateurs potentiels.

Avec les difficultés économiques, la qualification insuffisante de très nombreux candidats à l'emploi, et les disparités croissantes de ces candidats en matière de qualification, de milieu socio-culturel, d'éducation, de tranche d'âge, etc..., les outils classiques sont devenus inopérants.

Par ailleurs, il est notoire que les enseignants apprécient une certaine solitude dans leur travail intellectuel, la préparation de leurs cours par exemple. Cependant, en mode multimédia, la solitude devient totale et, plus grave, le lien 〈〈 relationnel 〉〉 avec l'étudiant - facteur essentiel - disparaît souvent.

Il en résulte souvent une déviation vers un enseignement déshumanisé, que vivent mal aussi bien les formateurs que les étudiants. Les formateurs parce qu'ils ont perdu leur relation vitale avec leur 〈〈 classe 〉〉, les étudiants ou stagiaires parce que, précisément, leur situation demande un traitement personnalisé dont ils perçoivent à la fois le besoin et l'absence.

On sait également que, comme d'autres professions, les enseignants sont attachés au support 〈〈 papiercrayon 〉〉 et éventuellement 〈〈 tableau 〉〉. Non pour des raisons désuètes, mais par efficacité. En mode multimédia, ceci disparaît.

En fait, les systèmes multimédia connus n'ont fait que transposer à l'enseignement l'utilisation d'outils connus dans l'industrie (Minitel, CD-ROM, informatique, etc...) mais en oubliant la spécificité de l'enseignement et des fonctions éducatives, avec les problèmes graves rappelés ci-dessus.

La présente invention réalise pour la première fois une symbiose entre les outils modernes de communication etc... et les impératif s, et aussi les 〈〈 rituels 〉〉, de l'enseignement.

Par 〈〈 rituels 〉〉, on entendra ici ces habitudes, conditionnements etc... des professeurs et des élèves créés par un siècle d'histoire de l'École, comme le 〈〈 papier-crayon 〉〉 etc... qui, s'ils ne sont pas pris en compte, conduisent l'outil à l'échec aussi sûrement que l'oubli des 〈〈 impératifs 〉〉.

Pour la première fois, l'invention permet de mettre en oeuvre un appareil et une méthode multimédia qui, simultanément :
- respecte la solitude du professeur MAIS
- permet au professeur de briser cette solitude lorsque cela est nécessaire ;
- permet au professeur de dialoguer en réseau, s'il le souhaite, avec d'autres professeurs pour rechercher une expérience par exemple ;
- permet au professeur de dialoguer avec les auteurs de méthodes pédagogiques, aussi bien pour recueillir un avis, une explication ou une aide, que pour leur assurer un retour d'information. Ce retour, jusqu'à présent, faisait totalement défaut alors que l'invention va permettre à l'expérience et aux difficultés ou questions des professeurs de nourrir la réflexion de l'auteur, qui à son tour va améliorer sa méthode. L'intérêt est considérable ;
- permet au professeur d'établir pour chaque étudiant/stagiaire un plan de travail ADAPTÉ au niveau et au contexte de l'étudiant ; de contrôler l'exécution du plan et au besoin de l'imposer : le 〈〈 maître 〉〉 reste présent ; de juger l'étudiant et de modifier en conséquence le plan de travail : l'étudiant s'aperçoit que son formateur le suit INDIVIDUELLEMENT et réagit à ses succès ou à ses difficultés ;
- de travailler néanmoins sur un mode apparenté au 〈〈 papier-crayon 〉〉 grâce à certains moyens décrits ci-dessous.

Par ailleurs, la structure en réseau et à gestion centrale permet de garder la mémoire de tous les mouvements et de tous les acquits intellectuels, et de les renvoyer en réseau : il y a donc enrichissement collectif, qui n'existait pas auparavant.

Il y aura donc incitation pour les formateurs à communiquer leur expérience et le système les y conduira.

Les formateurs auront à leur disposition les moyens classiques de documentations, banques de données, etc... mais ici encore selon un mode interactif et non plus passif. Le professeur peut choisir dans une vaste bibliothèque d'outils (qu'il ne lui est pas nécessaire d'acquérir, ce qui est un point pratique fondamental) à l'aide de moyens de recherche lui permettant de localiser et d'évaluer les outils correspondant à chaque situation.

L'invention sera décrite plus en détail dans ce qui suit en référence au dessin annexé sur lequel :
- la Figure 1 représente le schéma synoptique du réseau interactif d'enseignement multimédia créé par l'invention, et comprenant le 〈〈 poste formateur F1 〉〉,
- la Figure 2A représente un mode de réalisation matériel du poste multimédia F1.
- la Figure 2B représente un mode de réalisation matériel préféré du poste formateur F1.
- la Figure 3 représente l'invention sous la forme d'un algorithme.

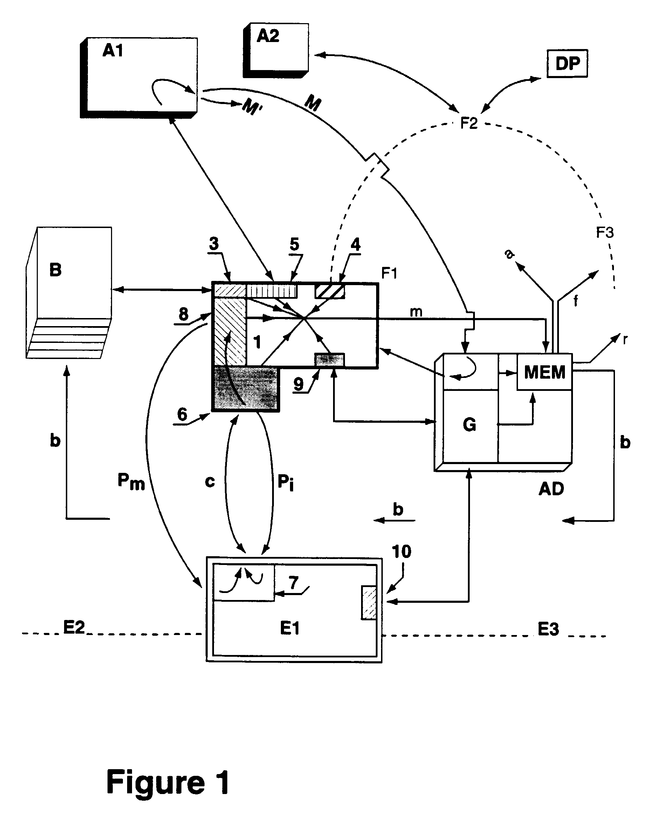

Si l'on se réfère à la Figure 1 on voit que, de manière globale, l'invention considère la création de fonctions et liens originaux, au moyen de l'appareil F1 ou 〈〈 poste formateur 〉〉, entre les élèves ou étudiants ou stagiaires E1, E2, E3... qui peuvent être de niveaux de qualification extrêmement différents, les formateurs F1, F2, ... établis en réseau et qui peuvent relever de disciplines différentes et/ou présenter des niveaux d'expérience différents, et les auteurs A1, A2, ... de méthodes pédagogiques.

Chaque formateur est connecté à des banques de données B.

Sous ce vocable, on a regroupé par simplicité aussi bien les banques de données classiques que, pour la première fois, des logiciels éducatifs et didacticiels. Ce dernier point est essentiel car il permet un accès peu onéreux à des systèmes qui étaient auparavant inaccessibles (inconnus, mal répertoriés, recherche et licence compliquées , coût élevé, impossibilité d'interrogation au simple 〈〈 temps passé 〉〉).

On notera que les banques de logiciels éducatifs sont intégrées au système local (CD-ROM) ce qui minimise les coûts de communication. Par contre, sont extérieures les banques de descripteurs de ces outils (recherche de l'outil sur le système central, visualisation et utilisation de l'outil sur place).

Enfin, un module d'administration AD gère et harmonise l'ensemble.

Le poste formateur F1 a naturellement une fonctionnalité technique importante qui sera décrite ci-dessous.

Les avantages de l'invention apparaîtront à la lecture de ce qui suit.

L'auteur A1 propose une méthode d'enseignement M qui, par hypothèse, a été retenue par l'utilisateur. Elle est disponible soit directement, soit (Fig. 1) au travers du module AD qui la met à disposition du réseau.

Le formateur F1 a en charge les élèves E1, E2, E3.

Pour chaque élève, il établit un plan de travail adapté au niveau connu ou supposé de l'étudiant (Pi). Il dispose pour cela d'outils informatiques 1 et d'un module 6 d'interface avec l'élève. Le plan de travail est mis au point, autant que cela est nécessaire, avec le support des banques de données B (module d'interface 3), avec l'expérience disponible dans le réseau F (module d'interface réseau 4), et avec le support de l'auteur lui-même par le module 5 de communication, le formateur pouvant soit simplement envoyer et recevoir des messages questions/réponses/commentaires soit prendre un rendez-vous pour un dialogue direct.

Non seulement la solitude du professeur est brisée, mais l'auteur peut tenir compte du retour d'information usager et proposer une méthode améliorée M' qui, si elle est approuvée, sera distribuée en réseau.

Par ailleurs, chaque formateur consulté par F1 peut à son tour consulter l'auteur A2 de son choix, ou sa documentation personnelle DP et répondre à F1 par le module 4.

Le Plan de travail initial Pi est donc adapté au mieux, 〈〈 ciblé 〉〉, par rapport au problème spécifique et aux besoins particuliers de chaque étudiant. Il est adressé à l'étudiant par le module d'interface F/E (6).

L'étudiant est contraint de suivre le plan car le poste étudiant E1 comporte un module (7) qui permet au formateur de contrôler les progrès (canal de communication/contrôle C).

Le module (8) de modification du plan de travail permet alors au formateur d'adapter le plan aux progrès de l'étudiant.

A ce sujet, il est important de préciser que le professeur a à sa disposition des outils de base (fiches, banques d'images et de textes) lui permettant de composer à la demande ses outils 〈〈 papier 〉〉 et de les adapter, facilement et avec tous les moyens disponibles, à chaque situation.

Naturellement, le formateur peut à nouveau consulter B, A, F2, etc... pour affiner son plan.

Cette modification se fait de manière préférée au niveau du module (8) par un système 〈〈 papier-crayon 〉〉 servi par des outils modernes : par exemple, le formateur peut travailler sur deux réponses fournies par l'auteur A1 et le formateur F3 par télécopie, fondre les télécopies en un seul texte avec éventuellement des modifications manuelles, 〈〈 scanner 〉〉 le résultat, et adresser à l'étudiant un Plan modifié Pm. Le système associe donc la souplesse manuelle et la puissance de l'informatique.

Un élément important, qui permet l'enrichissement des connaissances et de la mémoire collective du réseau réside dans le fait que chacune des opérations décrites ci-dessus dans les modules du poste formateur F est systématiquement collectée et envoyée (ligne m) vers un élément mémoire MEM du module d'administration, qui peut le remettre à disposition (ligne r) du réseau et le copier dans les banques de données B (ligne b).

Ceci s'applique également aux opérations comptables (module de facturation 9 dans le poste F1, 10 dans le poste E1, etc...) centralisées dans une unité de gestion G de l'administration.

Des informations, sélectionnées et convenablement traitées, peuvent être adressées périodiquement aux auteurs (ligue a) ou aux formateurs (ligue f) lesquels peuvent alors apprécier le succès et l'intérêt de telle ou telle méthode.

Il peut par exemple s'agir d'éléments statistiques classiques.

On s'aperçoit donc que les avantages sont considérables :
- le professeur n'est plus isolé, il peut dialoguer facilement, y compris en conservant nombre de ses habitudes ;
- il peut aussitôt après retrouver la solitude qui lui est nécessaire pour ses travaux de recherche ;
- ses plans de travail sont individualisés, ainsi que leur suivi ;
- les étudiants les perçoivent comme bien adaptés à leur cas propre ; ils suivent les modifications personnalisées apportées par leur formateur, et cela les motive ; ce 〈〈 contact 〉〉 avec le professeur est encore renforcé par la possibilité d'utilisation de l'image et du son (image et voix du professeur) ;
- les réactions des étudiants servent à moduler le plan mais aussi à évaluer une méthode. L'auteur n'est plus tenu à l'écart, il devient un partenaire ;
- enfin, chaque opération est enregistrée, traitée, et renvoyée en réseau, ou vers tous destinataires appropriés y compris les auteurs, pour un enrichissement collectif permanent et en temps réel : la pédagogie peut évoluer. Le système n'est pas inerte, il est devenu vivant.

Naturellement, les différents modules 4, 5, 3, 8, 6, 9 et 1 du poste formateur ne sont pas obligatoirement dissociés.

Au contraire il est bien évident qu'un même outil peut remplir plusieurs fonctions dans le cadre de la Figure 1 par exemple.

Il est également évident que certains modules présenteront des recouvrements : ainsi le module 〈〈 informatique 〉〉 général 1 pourra comporter un ordinateur, pour consulter les outils pédagogiques, comportant ou relié à un 〈〈 scanner 〉〉 utile au module 8 de modification du plan de travail, à un lecteur de CD-ROM synonyme de bibliothèque personnelle, capable également de converser par un MODEM/FAX avec les auteurs et les autres formateurs, et par messagerie électronique avec les membres du réseau.

Un 〈〈 Minitel 〉〉 pourra permettre les prises de rendez-vous après une recherche de l'expert.

Le 〈〈 scanner 〉〉, couplé à un traitement de texte et à une imprimante et à une télécopie, éventuellement sur MODEM, permet la relation 〈〈 crayon-papier 〉〉 qui rassure.

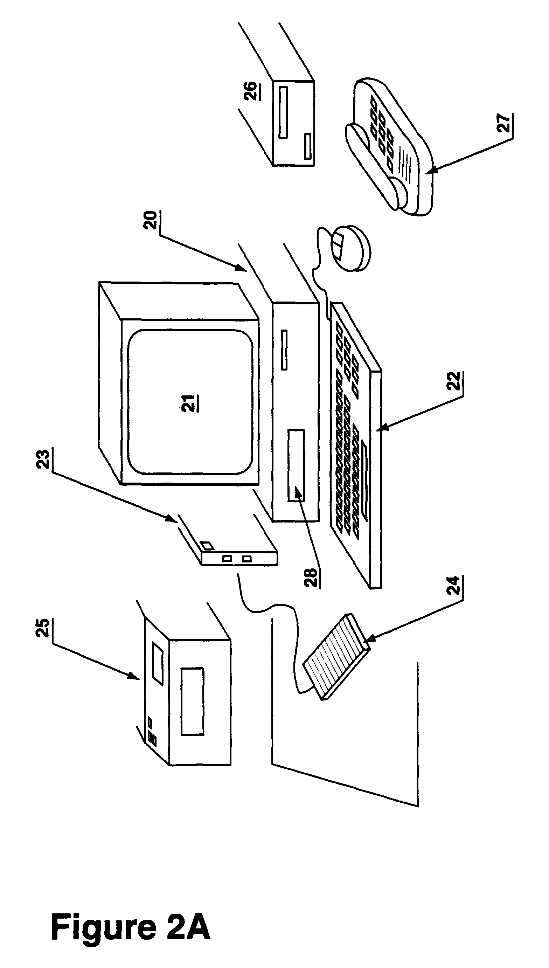

La Figure 2A représente schématiquement un poste formateur correspondant à un mode de réalisation matériel préféré de l'invention.

L'ordinateur 20 et son écran 21/clavier 22 offrent une première possibilité de communication par la messagerie en réseau, une seconde par le MODEM 23, et une troisième par la fonction MINITEL incorporée.

Le lecteur de CD-ROM, et éventuellement des banques de données internes, constituent la Documentation Personnelle du formateur.

Le MODEM, la messagerie, la télécopie (25) permettent l'accès aux aides que sont les auteurs, les autres formateurs, les banques de données B intégrées au système local (CD-ROM) dont on rappellera qu'elles contiennent des logiciels éducatifs sur lesquels il devient possible de se connecter 〈〈 au temps passé 〉〉, par exemple durant le temps nécessaire à la transformation d'un plan de travail, ou à la préparation d'un cours.

L'imprimante (26) matérialise les renseignements obtenus. Ces renseignements peuvent être modifiés manuellement, scannés (24) et réinjectés dans l'informatique puis réimprimés ou envoyés vers l'étudiant.

Si l'auteur ou les autres formateurs possèdent également un MODEM, le transfert de fichiers est directement possible : le formateur peut alors les recevoir, les modifier, les adapter, etc..., selon ses besoins, son expérience et le niveau de tel étudiant.

Il subsiste un poste téléphonique 27.

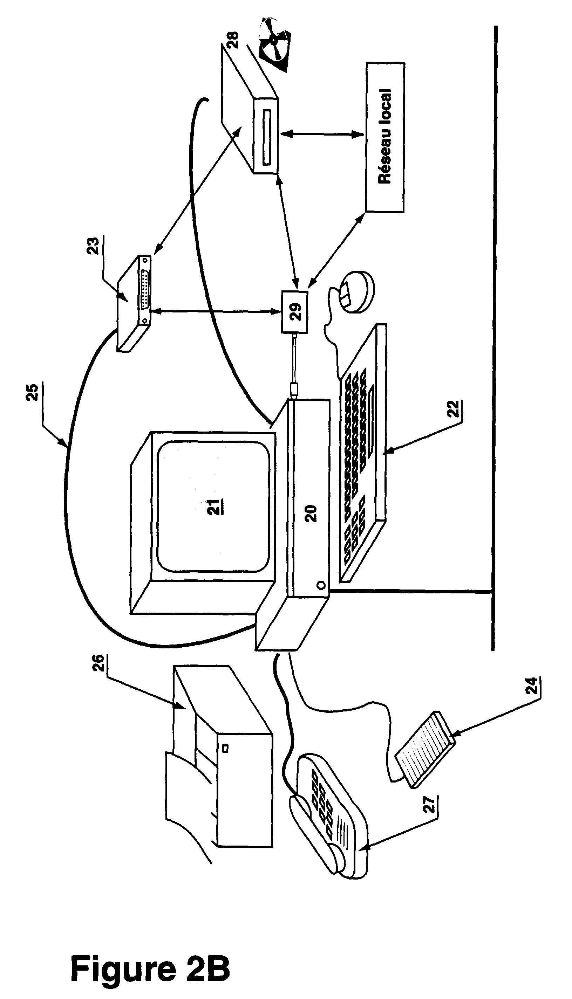

Le poste formateur est basé sur une combinaison de sous-ensembles techniques qui permettent d'assurer le fonctionnement complexe décrit ci-avant. Une combinaison originale préférée telle que représentée sur la Figure 2 B est celle d'un CD-ROM (lecteur 28) contenant une bibliothèque standard de données et d'outils pédagogiques sous un format propre au dispositif, d'un modem de communication réseau, d'un serveur de réseau local, contrôlés par une carte à puce (lecteur 29) servant tout à la fois de moyens de paiement, de tarifs propres au site (coefficient sur chaque produit), de personnalisation de la bibliothèque (filtre d'autorisation sur certains produits, gratuité de certains produits), de moyens de verrouillage et d'antipiratage (impossibilité de fonctionner sans la combinaison permanente de la carte et du CD-ROM), de moyens d'accès au réseau (identification, droits, connexion automatique, télécollecte des résultats, consolidation des traces d'usages), de contrôle du minitel intégré, de mémoire du site. La carte à puce, associée aux données spécifiques du CD-ROM, contrôle les accès aux banques de données externes, les connexions Minitel, les taux de facturation, les droits d'accès aux produits pédagogiques sur le réseau local tout en enregistrant la facturation.

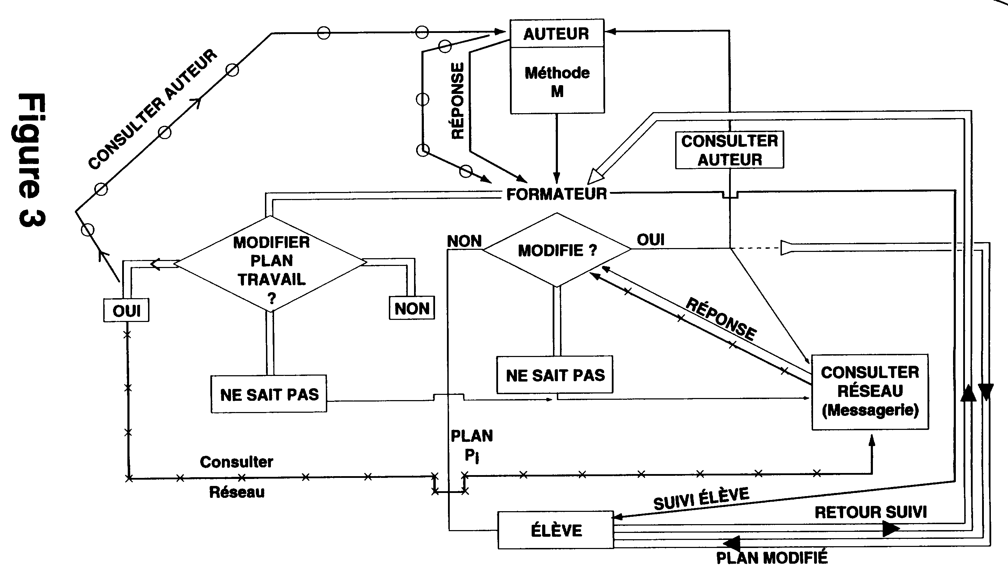

Un algorithme a été représenté sur la Figure 3.

Il montre bien le très original réseau de boucles interactives que crée l'invention.

L'invention consiste donc en un procédé et appareillage créant une pédagogie individualisée, évolutive, auto-enrichissante, et qui ménage les habitudes des professeurs et la demande des élèves, alors que toute informatisation de l'enseignement s'est toujours opposée à ces concepts, de par la définition même de l'informatique.

Le système permet donc :
- au professeur de disposer sans les acheter d'une bibliothèque d'outils digne d'un grand centre de ressource, de trouver dans cette bibliothèque les outils adaptés à chaque situation, d'adapter à la fois les outils informatiques et les supports papier, d'individualiser la formation via l'autoformation en pouvant gérer le guidage et le suivi personnalisé, d'avoir recours en permanence à un réseau d'appui et de partenaires quelle que soit sa localisation, d'enrichir l'expérience commune grâce à cette relation,
- à l'élève de travailler à son rythme au sein d'un groupe sur les outils adaptés à son niveau et à ses objectifs tout en ayant un guidage et un suivi personnalisé,
- aux auteurs et experts de la pédagogie de recueillir les enseignements des usages réels et de faire évoluer en permanence l'ensemble du système au bénéfice de tous,
- aux financeurs d'avoir un tableau de bord permanent de l'usage de leurs fonds.

## Revendications

1. Méthode multimédia utilisant des outils de type informatique, moyens d'impression, moyens de télécopie, moyens pour 〈〈 scanner 〉〉 des documents, un 〈〈 MODEM 〉〉, des moyens téléphoniques et/ou des moyens de type 〈〈 crayon - papier 〉〉., **caractérisée en ce que** lesdits moyens sont adaptés pour travailler en réseau local et distant de telle sorte que :
a) - le formateur ou professeur peut adresser à chaque apprenant ou élève un plan de travail ;
b) - l'apprenant ou élève peut correspondre avec le formateur ou professeur et exécuter son plan de travail ;
c) - le formateur ou professeur peut consulter les auteurs de méthodes pédagogiques, soit pour préparer le plan de travail de l'élève, soit pour le modifier, soit encore pour donner son opinion sur ladite méthode et participer ainsi, directement ou indirectement, à son évolution conduisant éventuellement à la création d'oeuvres dérivées ;
- l'auteur peut répondre au professeur soit pour préparer le plan de travail de l'élève, soit pour le modifier, soit pour exprimer un avis sur sa méthode ou l'opinion du professeur ;
- le professeur peut consulter des banques de données internes ou externes ou d'autres professeurs du réseau ;
d) - le professeur peut connaître à tout moment l'état d'avancement du plan de travail et les résultats des exercices réalisés par l'élève, ce qui lui permet d'adapter en temps réel le plan de travail de l'élève ;
e) - tout ou partie de ces opérations étant répétées en boucles interactives autant que nécessaire pour la formation personnalisée de l'apprenant ;
f) - l'ensemble des opérations est gardé en mémoire et est renvoyé en réseau selon les critères et les responsabilités définis préalablement par le gestionnaire du réseau détenteur de la carte à puce administrateur ;
et **caractérisée en ce que**
g) - chaque opération, notamment les accès aux banques de données externes, et aux ressources, est contrôlée et autorisée ou non au moyen d'un lecteur de carte à puce afin de :
- comptabiliser les accès aux produits pédagogiques,
- permettre la traçabilité des différentes opérations en temps réel,
- permettre la gestion du centre de formation : gestion administrative et financière
- autoriser l'accès aux données confidentielles.

2. Méthode multimédia utilisant des outils de type informatique, moyens d'impression, moyens de télécopie, moyens pour 〈〈 scanner 〉〉 des documents, un 〈〈 MODEM 〉〉, des moyens téléphoniques et/ou des moyens de type 〈〈 crayon - papier 〉〉, selon la revendication 1, **caractérisée en ce que** lesdits moyens sont adaptés pour travailler en réseau de telle sorte que :
a) - le formateur ou professeur peut adresser à chaque apprenant ou élève un plan de travail :
b) - l'apprenant ou élève peut correspondre avec le formateur ou professeur et exécuter son plan de travail ;
c) - le formateur ou professeur peut consulter les auteurs de méthodes pédagogiques, soit pour préparer le plan de travail de l'élève, soit pour le modifier, soit encore pour donner son opinion sur ladite méthode ;
- l'auteur peut répondre au professeur soit pour préparer le plan de travail de l'élève, soit pour le modifier, soit pour exprimer un avis sur sa méthode ou l'opinion du professeur ;
- le professeur peut consulter des banques de données internes ou externes ou d'autres professeurs du réseau ;
d) - le professeur peut adapter en temps réel le plan de travail de l'élève ;
e) - tout ou partie de ces opérations étant répétées en boucles intercatives autant que nécessaire pour la formation personnalisée de l'apprenant ;
f) - l'ensemble des opérations est gardé en mémoire et est renvoyé en réseau ;
et **caractérisée en ce que**
g) - chaque opération, notamment les accès aux banques de données externes, est contrôlée et autorisée ou non au moyen d'un lecteur de carte à puce qui facture les droits d'accès aux produits pédagogiques et permet la traçabilité des diverses opérations en temps réel et la gestion du réseau.

3. Poste multimédia pour la mise en oeuvre de la méthode selon la revendication 1 ou 2, **caractérisé en ce que** les moyens informatiques comportent un système CD-ROM (28).

4. Poste selon la revendication 3, **caractérisé en ce que** les moyens informatiques sont connectés à des banques de données B comportant, dans le système local, des logiciels éducatifs et didacticiels, et hors du système local, des banques de descripteurs de ces logiciels, le tout permettant un usage 〈〈 au temps passé 〉〉.

5. Poste selon la revendication 3 ou 4, **caractérisé en ce qu**'il comporte un module de facturation 9 et de plus un lecteur de carte à puces (29).

6. Poste selon la revendication 5, **caractérisé en ce que** le module de facturation 9 est de plus relié à une unité de gestion G d'un module administratif (AD) (Fig. 1 p 7 l 30 ff).

7. Poste selon la revendication 6, **caractérisé en ce que** l'unité de gestion G est reliée à un module de facturation 10 d'un poste étudiant ou élève ou stagiaire E (Fig. 1).

8. Poste selon l'une quelconque des revendications 3 à 7, **caractérisé en ce qu**'il est connecté à une unité centrale AD d'administration, notamment par son module 9, et par des modules 1, 4, 5, 3, 8, 6 permettant de collecter toutes les informations émises ou reçues ou transformées par ledit poste et de les adresser vers une mémoire centrale MEM ou G, MEM du module d'administration, qui peut elle-même renvoyer ces informations en réseau, et à tous les postes connectés.

9. Poste selon l'une quelconque des revendications 3 à 8, **caractérisé en ce qu**'il comprend un CD-ROM contenant ne bibliothèque standard de données et d'outils pédagogiques sous un format propre au dispositif, d'un modem de communication réseau, d'un serveur de réseau local, contrôlés par une carte à puce servant tout à la fois de moyens de paiement, de tarifs propres au site (coefficient sur chaque produit), de personnalisation de la bibliothèque (filtre d'autorisation sur certains produits, gratuité de certains produits), de moyens de verrouillage et d'anti-piratage (impossibilité de fonctionner sans la combinaison permanente de la carte et du CD-ROM), de moyens d'accès au réseau (identification, droits, connexion automatique, télécollecte des résultats, consolidation des traces d'usages), de contrôle du Minitel intégré, de mémoire du site.

10. Utilisation de la méthode ou du poste selon l'une quelconque des revendications 1 à 9 pour permettre :
- au professeur de disposer sans les acheter d'une bibliothèque d'outils digne d'un grand centre de ressource, de trouver dans cette bibliothèque les outils adaptés à chaque situation, d'adapter à la fois les outils informatiques et les supports papier, d'individualiser la formation via l'autoformation en pouvant gérer le guidage et le suivi personnalisé, d'avoir recours en permanence à un réseau d'appui et de partenaires quelle que soit sa localisation, d'enrichir l'expérience commune grâce à celle relation,
- à l'élève de travailler à son rythme au sein d'un groupe sur les outils adaptés à son niveau et à ses objectifs tout en bénéficiant d'un guidage et d'un suivi personnalisés,
- aux auteurs et experts de la pédagogie de recueillir les enseignements des usages réels et de faire évoluer en permanence l'ensemble du système au bénéfice de tous,
- aux financeurs d'avoir un tableau de bord permanent de l'usage de leurs fonds.

11. Poste selon l'une quelconque des revendications 3 à 9, **caractérisé en ce que** la carte à puce (lecteur 29) sert de moyen de parement, d'application des tarifs propres au site (coefficient sur chaque produit), de personnalisation de la bibliothèque, de filtre d'autorisation sur certains produits, de moyens de verrouillage et d'anti-piratage.

12. Poste selon l'une quelconque des revendications 3 à 9 ou 11, **caractérisé en ce que** la carte à puce (lecteur 29) sert de moyen d'accès au réseau (identification, droits, connexion automatique, télécollecte des résultats, consolidation des traces d'usage), de contrôle du Minitel intégré.

13. Poste selon l'une quelconque des revendications 3 à 9, 11 ou 12 **caractérisé en ce que** la carte à puce est combinée en permanence au CD-ROM.

14. Poste selon la revendication 13, **caractérisé en ce que** la carte à puce, associée aux données du CD-ROM, contrôle les accès aux banques de données externes, les connexions Minitel, les taux de facturation, les droits d'accès aux produits pédagogiques sur le réseau local tout en enregistrant la facturation.

15. Poste selon l'une quelconque des revendications 3 à 9 ou 11 à 14, **caractérisé en ce que** la carte à puce
- est un moyen de paiement
- est un moyen de verrouillage, anti-piratage, de contrôle d'accès au réseau et aux banques de données externes
- est une mémoire du site.

16. Poste selon l'une quelconque des revendications 3 à 9 ou 11 à 12, **caractérisé en ce que** la carte à puce remplit essentiellement trois fonctions :
- porte monnaie : les unités de consommation sont débitées :
soit au fil de l'eau
soit sur un compte pré-fixé (dans ce cas les unités non consommées sont récupérables)
- clé de sécurité physique et logique pour l'accès et l'utilisation du dispositif en fonction de l'utilisateur choisi
- dossier portable : enregistrement du (des) parcours de formation sélectionné(s) à l'intérieur de la carte, à destination d'un ou plusieurs utilisateurs.

17. Utilisation du poste selon l'une quelconque des revendications 11 à 16 pour permettre :
- au professeur de disposer sans les acheter d'une bibliothèque d'outils digne d'un grand centre de ressource, de trouver dans cette bibliothèque les outils adaptés à chaque situation, d'adapter à la fois les outils informatiques et les supports papier, d'individualiser la formation via l'autoformation en pouvant gérer le guidage et le suivi personnalisé, d'avoir recours en permanence à un réseau d'appui et de partenaires quelle que soit sa localisation, d'enrichir l'expérience commune grâce à cette relation,
- à l'élève de travailler à son rythme au sein d'un groupe sur les outils adaptés à son niveau et à ses objectifs tout en bénéficiant d'un guidage et d'un suivi personnalisés,
- aux auteurs et experts de la pédagogie de recueillir les enseignements des usages réels et de faire évoluer en permanence l'ensemble du système au bénéfice de tous,
- aux financeurs d'avoir un tableau de bord permanent de l'usage de leurs fonds.

18. Utilisation de la méthode ou du poste selon l'une quelconque des revendications 1 à 17 pour permettre :
- d'adapter les oeuvres légalement
- d'intégrer
• ses propres créations
• des créations extérieures (issues de base de données externes, sur disquettes, sur cédéroms, etc...)
c'est-à-dire d'intégrer des fonctions d'importation et d'exportation.

## Claims

1. A multimedia method using tools of data-processing type, printing means, facsimile means, means for scanning documents, a MODEM, telephonic means and/or means of "pen-paper" type, characterised in that said means are adapted to work in a local and remote network in such a way that:
a) - the instructor or teacher can present a work plan to each pupil or student;
b) - the pupil or student can correspond with the instructor or teacher and carry out his work plan;
c) - the instructor or teacher can consult the authors of educational methods either to prepare the student's work plan or to modify it, or else to give his/her opinion on said method and thus to participate, directly or indirectly, in its development, possibly leading to the creation of derivative works;
- the author can reply to the teacher either to prepare the student's work plan or to modify it, or to express an opinion on his method or the opinion of the teacher;
- the teacher can consult internal or external databanks or other teachers in the network;
d) - the teacher can at any time know the state of progress of the work plan and the results of exercises performed by the student, which enables him to adapt the student's work plan in real time;
e) - all or part of these operations being repeated in interactive loops as much as necessary for the personalised instruction of the pupil;
f) - all the operations are saved in a memory and are returned to the network in accordance with the criteria and responsibilities previously defined by the manager of the network, who holds the administrator smart card;
and characterised in that
g) - each operation, in particular access to external databanks, and to the resources, is controlled and authorised or not by means of a smart-card reader so as to:
- render compatible the access to the educational products,
- allow the traceability of the various operations in real time,
- allow the management of the training centre : administrative and financial management
- authorise access to confidential data.

2. A multimedia method using tools of data-processing type, printing means, facsimile means, means for scanning documents, a MODEM, telephonic means and/or means of "pen-paper" type according to claim 1, characterised in that said means are adapted to work in a network in such a way that:
a) - the instructor or teacher can present a work plan to each pupil or student;
b) - the pupil or student can correspond with the instructor or teacher and carry out his work plan;
c) - the instructor or teacher can consult the authors of educational methods either to prepare the student's work plan or to modify it, or else to give his/her opinion on said method;
- the author can reply to the teacher either to prepare the student's work plan or to modify it, or to express an opinion on his method or the opinion of the teacher;
- the teacher can consult internal or external databanks or other teachers in the network;
d) - the teacher can adapt the student's work plan in real time;
e) - all or part of these operations being repeated in interactive loops as much as necessary for the personalised instruction of the pupil;
f) - all the operations are saved in a memory and are returned to the network
and characterised in that
g) - each operation, in particular access to external databanks, is controlled and authorised or not by means of a smart-card reader which invoices the rights of access to the educational products and allows the traceability of the various operations in real time and the administration of the network.

3. A multimedia workstation for carrying out the method according to claim 1 or 2, characterised in that the data-processing means comprise a CD-ROM system (28).

4. A workstation according to claim 3, characterised in that the the data-processing means are connected to databanks B comprising, in the local system, educational software and, outside the local system, banks of identifiers of this software, all of which makes possible "elapsed time" use.

5. A workstation according to claim 3 or 4, characterised in that it comprises an invoicing module 9 and, additionally, a smart-card reader (29).

6. A workstation according to claim 5, characterised in that the invoicing module 9 is further connected to an administration unit G of an administration module (AD) (Figure 1, p. 7, l. 30 et seq.).

7. A workstation according to claim 6, characterised in that the administration unit G is connected to an invoicing module 10 of a workstation E of a pupil or student or trainee (Figure 1).

8. A workstation according to any one of claims 3 to 7, characterised in that it is connected to a central administration unit AD, in particular by its module 9, and by modules 1,4,5,3,8,6 making it possible collect all the data emitted or received or converted by said workstation, and to address them to a central memory MEM or G, MEM of the administration module, which can itself return these data to the network, and to all the connected workstations.

9. A workstation according to any one of claims 3 to 8, characterised in that it comprises a CD-ROM containing in a standard library of educational data and tools in a format specific to the system a network communication modem, a local network server, which are controlled by a smart card serving at the same time as means of payment at tariffs specific to the site (coefficient on each product), of personalising the library (filtering authorisation to certain products, no charge for certain products), means of locking and preventing unlawful copying (unable to operate without the permanent combination of the card and of the CD-ROM), access means to the network (identification, rights, automatic connection, electronic transfer of the results, consolidation of use traces), control of integrated "Minitel", memory of the site.

10. Use of the method or of the workstation according to any one of claims 1 to 9 to enable:
- the teacher to have access, without purchase thereof, to a library of tools appropriate to a substantial resource centre, to find in this library the tools adapted to each situation, to adapt both the data-processing tools and the paper media, to personalise the teaching via self-instruction by being able to manage the personalised guidance and follow-up, to have permanent recourse to a support and partner network whatever its location, to enrich common experience as a result of this relationship,
- the student to work at his own rhythm and among a group on the tools adapted to his level and to his targets, while benefiting from personalised guidance and follow-up,
- authors and experts in education to collect the lessons of real use and to develop permanently the entire system for the benefit of all,
- to financiers to have a permanent management report of the utilisation of their funds.

11. A workstation according to any one of claims 3 to 9, characterised in that the smart card (reader 29) serves as a security means, as means of applying the tariffs appropriate to the site (coefficient on each product), of personalising the library, of filtering authorisation to certain products, and as a means of locking and preventing unlawful copying.

12. A workstation according to any one of claims 3 to 9 or 11, characterised in that the smart card (reader 29) serves as a means of access to the network (identification, rights automatic connection, electronic transfer of the results, consolidation of use traces), control of integrated "Minitel".

13. A workstation according to any one of claims 3 to 9, 11 or 12, characterised in that the smart card is permanently combined with the CD-ROM.

14. A workstation according to claim 13, characterised in that the smart card, which is associated with the data of the CD-ROM, controls access to the external databanks, the Minitel connections, the invoicing rates, the rights of access to the educational products on the local network, while recording the invoicing thereof.

15. A workstation according to any one of claims 3 to 9 or 11 to 14, characterised in that the smart card
- is a payment means
- is a means of locking and preventing unlawful copying, and of controlling access to the network and to the external databanks
- is a memory of the site.

16. A workstation according to any one of claims 3 to 9 or 11 to 15, characterised in that the smart card essentially fulfills three functions:
- as a purse: the units consumed are debited:
either with the current
or on a preset account (in this case the unused units can be recovered)
- physical and logic security key for access and use of the system as a function of the user selected
- portable file: recording of the selected instruction course(s) within the card, intended for one or more users.

17. Use of the workstation according to any one of claims 11 to 16 to enable:
- the teacher to have access, without purchase thereof, to a library of tools appropriate to a substantial resource centre, to find in this library the tools adapted to each situation, to adapt both the data-processing tools and the paper media, to personalise the teaching via self-instruction by being able to manage the personalised guidance and follow-up, to have permanent recourse to a support and partner network, whatever its location, to enrich common experience as a result of this relationship,
- the student to work at his own rhythm and among a group on the tools adapted to his level and to his targets, while benefiting from personalised guidance and follow-up,
- authors and experts in education to collect the lessons of real use and to develop permanently the entire system for the benefit of all
- to financiers to have a permanent management report of the utilisation of their funds.

18. Use of the method or of the workstation according to any one of claims 1 to 17 to make it possible:
- to adapt the work lawfully
- to integrate
* personal creations
* external creations (derived from an external database, on diskette, on cd-roms, etc.)
i.e., to integrate import and export functions.

## Patentansprüche

1. Multimedia-Verfahren unter Verwendung von Datenverarbeitungswerkzeugen, Druckmitteln, Fernkopiemitteln, Mitteln zum "Scannen" von Unterlagen, eines "MODEM", Fernsprechmitteln und/oder Mitteln vom Typ "Bleistift-Papier",
**dadurch gekennzeichnet**, daß diese Mittel dafür ausgelegt sind, in Orts- und Fernnetz so zu arbeiten,
a) daß der Ausbilder oder Lehrer jedem Lernenden oder Schüler einen Arbeitsplan senden kann,
b) daß der Lernende oder Schüler mit dem Ausbilder oder Lehrer korrespondieren und seinen Arbeitsplan ausführen kann,
c) daß der Ausbilder oder Lehrer die Autoren von pädagogischen Methoden für die Ausarbeitung des Arbeitsplans des Schülers oder seine Änderung oder zur Abgabe seiner Meinung über diese Methode konsultieren kann und auf diese Weise direkt oder indirekt an ihrer Weiterentwicklung teilnehmen kann, die ggf. zur Schaffung von abgeleiteten Werken führt,
- daß der Autor dem Lehrer zum Zweck der Ausarbeitung des Arbeitsplans des Schülers oder seiner Änderung oder zum Zweck der Stellungnahme zu seiner Methode oder zur Meinung des Lehrers antworten kann,
- daß der Lehrer interne oder externe Datenbanken oder andere Lehrer des Netzes konsultieren kann,
d) daß der Lehrer zu jedem Zeitpunkt den Ausführungsstand des Arbeitsplans und die Ergebnisse der Übungen des Schülers kennen kann, was ihm die Anpassung des Arbeitsplans des Schülers in Echtzeit gestattet,
e) wobei alle diese Arbeitsgänge oder ein Teil davon in interaktiven Schleifen so oft wiederholt werden, wie es für die individuelle Ausbildung des Lernenden erforderlich ist,
f) daß die Gesamtheit der Arbeitsgänge gespeichert wird und in das Netz eingegeben wird, und zwar gemäß Kriterien und Zuständigkeiten, die zuvor durch den über die Verwaltungs-Chipkarte verfügenden Leiter des Netzes festgelegt wurden, und
**dadurch gekennzeichnet**,
g) daß jeder Arbeitsgang, insbesondere die Zugriffe auf die externen Datenbanken und auf die Hilfsquellen mit Hilfe eines Chipkartenlesers kontrolliert und zugelassen werden oder nicht,
- um die Zugriffe auf die pädagogischen Produkte buchmäßig zu erfassen,
- um die Rückverfolgbarkeit der verschiedenen Arbeitsgänge in Echtzeit zu gestatten,
- um die Leitung der Bildungseinrichtung zu gestatten: administrative und finanzielle Leitung,
- um den Zugriff auf vertrauliche Daten zuzulassen.

2. Multimedia-Verfahren unter Verwendung von Datenverarbeitungswerkzeugen, Druckmitteln, Fernkopiemitteln, Mitteln zum "Scannen" von Unterlagen, eines "MODEM", Fernsprechmitteln und/oder Mitteln vom Typ "Bleistift-Papier" nach Anspruch 1, **dadurch gekennzeichnet**, daß diese Mittel ausgelegt sind, um im Netz so zuarbeiten,
a) daß der Ausbilder oder Lehrer jedem Lernenden oder Schüler einen Arbeitsplan senden kann,
b) daß der Lernende oder Schüler mit dem Ausbilder oder Lehrer korrespondieren und seinen Arbeitsplan ausführen kann,
c) daß der Ausbilder oder Lehrer die Autoren von pädagogischen Methoden für die Ausarbeitung des Arbeitsplans des Schülers oder seine Änderung oder zur Abgabe seiner Meinung über diese Methode konsultieren kann,
- daß der Autor dem Lehrer zum Zweck der Ausarbeitung des Arbeitsplans des Schülers oder seiner Änderung oder zum Zweck der Stellungnahme zu seiner Methode oder zur Meinung des Lehrers antworten kann,
- daß der Lehrer interne oder externe Datenbanken oder andere Lehrer des Netzes konsultieren kann,
d) daß der Lehrer den Arbeitsplan in Echtzeit anpassen kann,
e) wobei alle diese Arbeitsgänge oder ein Teil davon in interaktiven Schleifen so oft wiederholt werden, wie es für die individuelle Ausbildung des Lernenden erforderlich ist,
f) daß die Gesamtheit der Arbeitsgänge gespeichert wird und in das Netz eingegeben wird, und
**dadurch gekennzeichnet**,
g) daß jeder Arbeitsgang, insbesondere die Zugriffe auf die externen Datenbanken mit Hilfe eines Chipkartenlesers kontrolliert und zugelassen werden oder nicht, der die Gebühren für den Zugriff auf die pädagogischen Produkte verrechnet und die Zurückverfolgbarkeit der einzelnen Arbeitsgänge in Echtzeit und die Verwaltung des Netzes gestattet.

3. Mulitmedia-Arbeitsplatz zur Durchführung des Verfahrens nach Anspruch 1 oder 2,
**dadurch gekennzeichnet**, daß die Datenverarbeitungsmittel ein CD-ROM-System (28) umfassen.

4. Arbeitsplatz nach Anspruch 3,
**dadurch gekennzeichnet**, daß die Datenverarbeitungsmittel mit Datenbanken B verbunden sind, die im Ortssystem Lernsoftwares und didaktische Softwares und außerhalb des Ortssystems Banken von Deskriptoren dieser Softwares umfassen, wobei das Ganze eine Benutzung in Ist-Zeit gestattet.

5. Arbeitsplatz nach Anspruch 3 oder 4,
**dadurch gekennzeichnet**, daß er ein Verrechnungsmodul 9 und außerdem einen Chipkartenleser (29) umfaßt.

6. Arbeitsplatz nach Anspruch 5,
**dadurch gekennzeichnet**, daß das Verrechnungsmodul 9 außerdem mit einer Steuereinheit G eines Verwaltungsmoduls (AD) verbunden ist (Fig. 1, Seite 7, Zeile 30 ff).

7. Arbeitsplatz nach Anspruch 6,
**dadurch gekennzeichnet**, daß die Steuereinheit G mit einem Verrechnungsmodul 10 eines Studenten-, Schüler- oder Praktikantenarbeitsplatzes E (Fig. 1) verbunden ist.

8. Arbeitsplatz nach einem der Ansprüche 3 bis 7,
**dadurch gekennzeichnet**, daß er insbesondere über sein Modul 9 und über Module 1, 4, 5, 3, 8, 6 mit einer zentralen Verwaltungseinheit AD verbunden ist, die es gestattet, alle von diesem Arbeitsplatz gesendeten, empfangenen oder umgewandelten Daten zu sammeln und sie einem zentralen Speicher MEM oder G, MEM des Verwaltungsmoduls einzugeben, der seinerseits diese Daten in das Netz und in alle angeschlossenen Arbeitsplätze eingeben kann.

9. Arbeitsplatz nach einem der Ansprüche 3 bis 8,
**dadurch gekennzeichnet**, daß er einen CD-ROM, der eine Standardbibliothek von Daten und pädagogischen Werkzeugen in einem für die Vorrichtung geeigneten Format enthält, ein Netzanschlußmodem, einen Ortsnetzserver umfaßt, die durch eine Chipkarte gesteuert werden, die gleichzeitig als Mittel der Zahlung, der Anwendung von dem Standort eigenen Gebühren (Koeffizient auf jedem Produkt), der persönlichen Gestaltung der Bibliothek (Zulassungsfilter auf manchen Produkten, Gebührenfreiheit mancher Produkte), als Verriegelungs- und Piraterieschutzmittel (Unmöglichkeit, ohne ständige Kombination von Karte und CD-ROM zu arbeiten), als Mittel für den Zugriff auf das Netz (Identifizierung, Rechte, automatische Verbindung, Fernsammlung der Ergebnisse, Verfestigung der Gebrauchsspuren (consolidation des traces d'usages)), zur Steuerung des integrierten Minitel, als Speichermittel des Standorts dient.

10. Verwendung des Verfahrens oder des Arbeitsplatzes nach einem der Ansprüche 1 bis 9,
- um dem Lehrer zu gestatten, ohne sie zu kaufen, über eine Werkzeugbibliothek zu verfügen, die einem großen Hilfsquellenzentrum würdig ist, in dieser Bibliothek die an jede Situation angepaßten Werkzeuge zu finden, gleichzeitig die Datenverarbeitungswerkzeuge und die Papierträger anzupassen, die Ausbildung vermittels Selbstbildung individuell zu gestalten, indem die Führung und die persönliche Betreuung gelenkt werden können, ständig zurückzugreifen auf ein Unterstützungs- und Partnernetz unabhängig von seinem Standort, dank dieser Verbindung die gemeinsame Erfahrung zu bereichern,
- um dem Schüler zu gestatten, in seinem Rhythmus innerhalb einer Gruppe mit den Werkzeugen zu arbeiten, die an sein Niveau und an seine Ziele angepaßt sind, indem er gleichzeitig über persönliche Führung und Betreuung verfügt,
- um den Autoren und Pädagogen zu gestatten, die Lehren aus den realen Anwendungen zu sammeln und ständig das gesamte System zum Nutzen aller weiterzuentwickeln,
- um den Finanzierern zu gestatten, über eine ständige Informationstafel über die Benutzung ihres Fonds zu verfügen.

11. Arbeitsplatz nach einem der Ansprüche 3 bis 9,
**dadurch gekennzeichnet**, daß die Chipkarte (Leser 29) als Mittel der Zahlung, der Anwendung der dem Standort eigenen Gebühren (Koeffizient aufjedem Produkt), zur persönlichen Gestaltung der Bibliothek, als Zulassungsfilter auf manchen Produkten, als Mittel der Verriegelung und des Piraterieschutzes dient.

12. Arbeitsplatz nach einem der Ansprüche 3 bis 9 oder 11,
**dadurch gekennzeichnet**, daß die Chipkarte (Leser 29) als Mittel des Zugriffs auf das Netz (Identifizierung, Rechte, automatische Verbindung, Fernsammlung der Ergebnisse, Verfestigung der Gebrauchsspuren (consolidation des traces d'usages)), der Steuerung des integrierten Minitels dient

13. Arbeitsplatz nach einem der Ansprüche 3 bis 9, 11 oder 12,
**dadurch gekennzeichnet**, daß die Chipkarte ständig mit dem CD-ROM kombiniert ist.

14. Arbeitsplatz nach Anspruch 13,
**dadurch gekennzeichnet**, daß die den Daten des CD-ROM zugeordnete Chipkarte die Zugriffe auf die externen Datenbanken, die Minitelverbindungen, die Verrechnungssätze, die Rechte für den Zugriff auf die pädagogischen Produkte im Ortsnetz unter Aufzeichnung der Berechnung steuert.

15. Arbeitsplatz nach einem der Ansprüche 3 bis 9 oder 11 bis 14,
**dadurch gekennzeichnet**, daß die Chipkarte
- ein Zahlungsmittel ist,
- ein Mittel zur Verriegelung, zum Piraterieschutz, zur Kontrolle des Zugriffs auf das Netz und auf die externen Datenbanken ist,
- ein Speicher des Standorts ist.

16. Arbeitsplatz nach einem der Ansprüche 3 bis 9 oder 11 bis 15,
**dadurch gekennzeichnet**, daß die Chipkarte im wesentlichen drei Funktionen erfüllt:
- Portemonnaie: die Verbrauchseinheiten werden abgebucht:
entweder in Strömungsrichtung
oder von einem zuvor festgelegten Konto (in diesem Fall sind die nicht verbrauchten Einheiten wieder verwendbar),
- körperlicher oder Software-Sicherheitsschlüssel für den Zugriff und die Verwendung der Verrichtung in Abhängigkeit vom gewählten Benutzer,
- tragbare Unterlage: Aufzeichnung des (der) im Inneren der Karte ausgewählten Ausbildungswegs/wege für einen oder mehrere Benutzer.

17. Verwendung des Arbeitsplatzes nach einem der Ansprüche 11 bis 16,
- um dem Lehrer zu gestatten, ohne sie zu kaufen, über eine Werkzeugbibliothek zu verfügen, die einem großen Hilfsquellenzentrum würdig ist, in dieser Bibliothek die an jede Situation angepaßten Werkzeuge zu finden, gleichzeitig die Datenverarbeitungswerkzeuge und die Papierträger anzupassen, die Ausbildung vermittels Selbstbildung individuell zu gestalten, indem die Führung und die persönliche Betreuung gelenkt werden können, ständig zurückzugreifen auf ein Unterstützungs- und Partnernetz unabhängig von seinem Standort, dank dieser Verbindung die gemeinsame Erfahrung zu bereichern,
- um dem Schüler zu gestatten, in seinem Rhythmus innerhalb einer Gruppe mit den Werkzeugen zu arbeiten, die an sein Niveau und an seine Ziele angepaßt sind, indem er gleichzeitig über persönliche Führung und Betreuung verfügt,
- um den Autoren und Pädagogen zu gestatten, die Lehren aus den realen Anwendungen zu sammeln und ständig das gesamte System zum Nutzen aller weiterzuentwickeln,
- um den Finanzierern zu gestatten, über eine ständige Informationstafel über die Benutzung ihres Fonds zu verfügen.

18. Verwendung des Verfahrens oder des Arbeitsplatzes nach einem der Ansprüche 1 bis 17, um zu gestatten:
- die Werke legal zu adaptieren,
-
• seine eigenen Schöpfungen,
• äußere Schöpfungen (aus externen Datenbasen, auf Disketten, auf CD-ROMs usw.) zu integrieren, d.h. Import- und Exportfunktionen zu integrieren.
